# FASCICULE DE BREVET EUROPEEN

(11) **EP 2 379 347 B1**
(45) Date de publication et mention de la délivrance du brevet: **06.02.2013**
(21) Numéro de dépôt: 09748353.1
(22) Date de dépôt: 10.11.2009
(51) Int. Cl.: B60C 9/20, B60C 9/22

(54) **PNEUMATIQUE POUR VÉHICULES LOURDS DONT L'ARMATURE DE SOMMET COMPORTE AU MOINS UNE COUCHE D'ÉLÉMENTS DE RENFORCEMENT CIRCONFÉRENTIELS**
REIFEN FÜR SCHWERFAHRZEUGE MIT LAUFFLÄCHENVERSTÄRKUNG, DIE MINDESTENS EINE SCHICHT AUS UMFANGSVERSTÄRKUNGSELEMENTEN UMFASST
TYRE FOR HEAVY VEHICLES, WITH A CROWN REINFORCEMENT COMPRISING AT LEAST ONE LAYER OF CIRCUMFERENTIAL REINFORCING ELEMENTS

(30) Priorité: 17.12.2008 FR 0858728
(43) Date de publication de la demande: 26.10.2011
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: CHAULET, Christelle, F-63100 Clermont-Ferrand (FR); AUDIGIER, Richard, F-63350 St-Laure (FR); BOYER, Chris, F-63800 Cournon d'Auvergne (FR)
(74) Mandataire: Le Cam, Stéphane Georges Elie
(86) Numéro de dépôt international: PCT/EP2009/064916
(87) Numéro de publication internationale: WO 2010/069676

(56) Documents cités:
- EP-A- 1 559 588
- WO-A-2005/016668
- WO-A-2005/025895
- WO-A-2008/050545
- JP-A- 7 069 005

## Description

La présente invention concerne un pneumatique, à armature de carcasse radiale et plus particulièrement un pneumatique destiné à équiper des véhicules portant de lourdes charges, tels que, par exemple les camions, tracteurs, remorques ou bus routiers.

L'armature de renforcement ou renforcement des pneumatiques et notamment des pneumatiques de véhicules de type poids-lourds est à l'heure actuelle - et le plus souvent - constituée par empilage d'une ou plusieurs nappes désignées classiquement « nappes de carcasse », «nappes sommet », etc. Cette façon de désigner les armatures de renforcement provient du procédé de fabrication, consistant à réaliser une série de produits semi-finis en forme de nappes, pourvues de renforts filaires souvent longitudinaux, qui sont par la suite assemblées ou empilées afin de confectionner une ébauche de pneumatique. Les nappes sont réalisées à plat, avec des dimensions importantes, et sont par la suite coupées en fonction des dimensions d'un produit donné. L'assemblage des nappes est également réalisé, dans un premier temps, sensiblement à plat. L'ébauche ainsi réalisée est ensuite mise en forme pour adopter le profil toroïdal typique des pneumatiques. Les produits semi-finis dits « de finition » sont ensuite appliqués sur l'ébauche, pour obtenir un produit prêt pour la vulcanisation.

Un tel type de procédé "classique" implique, en particulier pour la phase de fabrication de l'ébauche du pneumatique, l'utilisation d'un élément d'ancrage (généralement une tringle), utilisé pour réaliser l'ancrage ou le maintien de l'armature de carcasse dans la zone des bourrelets du pneumatique. Ainsi, pour ce type de procédé, on effectue un retournement d'une portion de toutes les nappes composant l'armature de carcasse (ou d'une partie seulement) autour d'une tringle disposée dans le bourrelet du pneumatique. On crée de la sorte un ancrage de l'armature de carcasse dans le bourrelet.

La généralisation dans l'industrie de ce type de procédé classique, malgré de nombreuses variantes dans la façon de réaliser les nappes et les assemblages, a conduit l'homme du métier à utiliser un vocabulaire calqué sur le procédé ; d'où la terminologie généralement admise, comportant notamment les termes «nappes», «carcasse», «tringle», «conformation» pour désigner le passage d'un profil plat à un profil toroïdal, etc.

Il existe aujourd'hui des pneumatiques qui ne comportent à proprement parler pas de «nappes» ou de «tringles» d'après les définitions précédentes. Par exemple, le document EP 0 582 196 décrit des pneumatiques fabriqués sans l'aide de produits semi-finis sous forme de nappes. Par exemple, les éléments de renforcement des différentes structures de renfort sont appliqués directement sur les couches adjacentes de mélanges caoutchouteux, le tout étant appliqué par couches successives sur un noyau toroïdal dont la forme permet d'obtenir directement un profil s'apparentant au profil final du pneumatique en cours de fabrication. Ainsi, dans ce cas, on ne retrouve plus de «semi-finis», ni de «nappes», ni de «tringle». Les produits de base tels les mélanges caoutchouteux et les éléments de renforcement sous forme de fils ou filaments, sont directement appliqués sur le noyau. Ce noyau étant de forme toroïdale, on n'a plus à former l'ébauche pour passer d'un profil plat à un profil sous forme de tore.

Par ailleurs, les pneumatiques décrits dans ce document ne disposent pas du "traditionnel" retournement de nappe carcasse autour d'une tringle. Ce type d'ancrage est remplacé par un agencement dans lequel on dispose de façon adjacente à ladite structure de renfort de flanc des fils circonférentiels, le tout étant noyé dans un mélange caoutchouteux d'ancrage ou de liaison.

Il existe également des procédés d'assemblage sur noyau toroïdal utilisant des produits semi-finis spécialement adaptés pour une pose rapide, efficace et simple sur un noyau central. Enfin, il est également possible d'utiliser un mixte comportant à la fois certains produits semi-finis pour réaliser certains aspects architecturaux (tels que des nappes, tringles, etc), tandis que d'autres sont réalisés à partir de l'application directe de mélanges et/ou d'élément de renforcement.

Dans le présent document, afin de tenir compte des évolutions technologiques récentes tant dans le domaine de la fabrication que pour la conception de produits, les termes classiques tels que «nappes», «tringles», etc., sont avantageusement remplacés par des termes neutres ou indépendants du type de procédé utilisé. Ainsi, le terme «renfort de type carcasse» ou «renfort de flanc» est valable pour désigner les éléments de renforcement d'une nappe carcasse dans le procédé classique, et les éléments de renforcement correspondants, en général appliqués au niveau des flancs, d'un pneumatique produit selon un procédé sans semi-finis. Le terme «zone d'ancrage» pour sa part, peut désigner tout autant le "traditionnel" retournement de nappe carcasse autour d'une tringle d'un procédé classique, que l'ensemble formé par les éléments de renforcement circonférentiels, le mélange caoutchouteux et les portions adjacentes de renfort de flanc d'une zone basse réalisée avec un procédé avec application sur un noyau toroïdal.

D'une manière générale dans les pneumatiques de type poids-lourds, l'armature de carcasse est ancrée de part et d'autre dans la zone du bourrelet et est surmontée radialement par une armature de sommet constituée d'au moins deux couches, superposées et formées de fils ou câbles parallèles dans chaque couche et croisés d'une couche à la suivante en faisant avec la direction circonférentielle des angles compris entre 10° et 45°. Lesdites couches de travail, formant l'armature de travail, peuvent encore être recouvertes d'au moins une couche dite de protection et formée d'éléments de renforcement avantageusement métalliques et extensibles, dits élastiques. Elle peut également comprendre une couche de fils ou câbles métalliques à faible extensibilité faisant avec la direction circonférentielle un angle compris entre 45° et 90°, cette nappe, dite de triangulation, étant radialement située entre l'armature de carcasse et la première nappe de sommet dite de travail, formées de fils ou câbles parallèles présentant des angles au plus égaux à 45° en valeur absolue. La nappe de triangulation forme avec au moins ladite nappe de travail une armature triangulée, qui présente, sous les différentes contraintes qu'elle subit, peu de déformations, la nappe de triangulation ayant pour rôle essentiel de reprendre les efforts de compression transversale dont est l'objet l'ensemble des éléments de renforcement dans la zone du sommet du pneumatique.

Dans le cas des pneumatiques pour véhicules "Poids-Lourds", une seule couche de protection est habituellement présente et ses éléments de protection sont, dans la plupart des cas, orientés dans la même direction et avec le même angle en valeur absolue que ceux des éléments de renforcement de la couche de travail radialement la plus à l'extérieur et donc radialement adjacente. Dans le cas de pneumatiques de Génie Civil destinés aux roulages sur sols plus ou moins accidentés, la présence de deux couches de protection est avantageuse, les éléments de renforcement étant croisés d'une couche à la suivante et les éléments de renforcement de la couche de protection radialement intérieure étant croisés avec les éléments de renforcement inextensibles de la couche de travail radialement extérieure et adjacente à ladite couche de protection radialement intérieure.

Des câbles sont dits inextensibles lorsque lesdits câbles présentent sous une force de traction égale à 10% de la force de rupture un allongement relatif au plus égal à 0,2%.

Des câbles sont dits élastiques lorsque lesdits câbles présentent sous une force de traction égale à la charge de rupture un allongement relatif au moins égal à 3% avec un module tangent maximum inférieure à 150 GPa.

Des éléments de renforcement circonférentiels sont des éléments de renforcement qui font avec la direction circonférentielle des angles compris dans l'intervalle + 2,5°, - 2,5° autour de 0°.

La direction circonférentielle du pneumatique, ou direction longitudinale, est la direction correspondant à la périphérie du pneumatique et définie par la direction de roulement du pneumatique.

La direction transversale ou axiale du pneumatique est parallèle à l'axe de rotation du pneumatique.

La direction radiale est une direction coupant l'axe de rotation du pneumatique et perpendiculaire à celui-ci.

L'axe de rotation du pneumatique est l'axe autour duquel il tourne en utilisation normale.

Un plan radial ou méridien est un plan qui contient l'axe de rotation du pneumatique.

Le plan médian circonférentiel, ou plan équatorial, est un plan perpendiculaire à l'axe de rotation du pneu et qui divise le pneumatique en deux moitiés.

On entend par « module d'élasticité » d'un mélange caoutchouteux, un module sécant d'extension à 10 % de déformation et à température ambiante.

En ce qui concerne les compositions de caoutchouc, les mesures de module sont effectuées en traction selon la norme AFNOR-NFT-46002 de septembre 1988 : on mesure en seconde élongation (i.e., après un cycle d'accommodation) le module sécant nominal (ou contrainte apparente, en MPa) à 10% d'allongement (conditions normales de température et d'hygrométrie selon la norme AFNOR-NFT-40101 de décembre 1979).

En ce qui concerne les fils ou câbles métalliques, les mesures de force à la rupture (charge maximale en N), de résistance à la rupture (en MPa) et d'allongement à la rupture (allongement total en %) sont effectuées en traction selon la norme ISO 6892 de 1984.

Certains pneumatiques actuels, dits "routiers", sont destinés à rouler à grande vitesse et sur des trajets de plus en plus longs, du fait de l'amélioration du réseau routier et de la croissance du réseau autoroutier dans le monde. L'ensemble des conditions, sous lesquelles un tel pneumatique est appelé à rouler, permet sans aucun doute un accroissement du nombre de kilomètres parcourus, l'usure du pneumatique étant moindre ; par contre l'endurance de ce dernier et en particulier de l'armature de sommet est pénalisée.

Il existe en effet des contraintes au niveau de l'armature de sommet et plus particulièrement des contraintes de cisaillement entre les couches de sommet, alliées à une élévation non négligeable de la température de fonctionnement au niveau des extrémités de la couche de sommet axialement la plus courte, qui ont pour conséquence l'apparition et la propagation de fissures de la gomme au niveau desdites extrémités. Le même problème existe dans le cas de bords de deux couches d'éléments de renforcement, ladite autre couche n'étant pas obligatoirement radialement adjacente à la première.

Afin d'améliorer l'endurance de l'armature de sommet du type de pneumatique étudié, des solutions relatives à la structure et qualité des couches et/ou profilés de mélanges caoutchouteux qui sont disposés entre et/ou autour des extrémités de nappes et plus particulièrement des extrémités de la nappe axialement la plus courte ont déjà été apportées.

Le brevet FR 1 389 428, pour améliorer la résistance à la dégradation des mélanges de caoutchouc situés au voisinage des bords d'armature de sommet, préconise l'utilisation, en combinaison avec une bande de roulement de faible hystérésis, d'un profilé de caoutchouc couvrant au moins les côtés et les bords marginaux de l'armature de sommet et constitué d'un mélange caoutchouteux à faible hystérésis.

Le brevet FR 2 222 232, pour éviter les séparations entre nappes d'armature de sommet, enseigne d'enrober les extrémités de l'armature dans un matelas de caoutchouc, dont la dureté Shore A est différente de celle de la bande de roulement surmontant ladite armature, et plus grande que la dureté Shore A du profilé de mélange caoutchouteux disposé entre les bords de nappes d'armature de sommet et armature de carcasse.

La demande française FR 2 728 510 propose de disposer, d'une part entre l'armature de carcasse et la nappe de travail d'armature de sommet, radialement la plus proche de l'axe de rotation, une nappe axialement continue, formée de câbles métalliques inextensibles faisant avec la direction circonférentielle un angle au moins égal à 60°, et dont la largeur axiale est au moins égale à la largeur axiale de la nappe de sommet de travail la plus courte, et d'autre part entre les deux nappes de sommet de travail une nappe additionnelle formée d'éléments métalliques, orientés sensiblement parallèlement à la direction circonférentielle.

Les roulages prolongés dans des conditions particulièrement sévères des pneumatiques ainsi construits ont fait apparaître des limites en termes d'endurance de ces pneumatiques.

Pour remédier à de tels inconvénients et améliorer l'endurance de l'armature de sommet de ces pneumatiques, il a été proposé d'associer aux couches de sommet de travail à angle au moins une couche additionnelle d'éléments de renforcement sensiblement parallèles à la direction circonférentielle. La demande française WO 99/24269 propose notamment, de part et d'autre du plan équatorial et dans le prolongement axial immédiat de la nappe additionnelle d'éléments de renforcement sensiblement parallèles à la direction circonférentielle, de coupler, sur une certaine distance axiale, les deux nappes de sommet de travail formées d'éléments de renforcement croisés d'une nappe à la suivante pour ensuite les découpler par des profilés de mélange de caoutchouc au moins sur le restant de la largeur commune aux dites deux nappes de travail.

Un pneumatique ayant les caractéristiques techniques du préambule de la revendication 1 est divulgué dans le document WO-A-2005 025 895.

La couche d'éléments de renforcement circonférentielles est usuellement constituées par au moins un câble métallique enroulé pour former une spire dont l'angle de pose par rapport à la direction circonférentielle est inférieur à 8°. Les câbles initialement fabriqués sont enduits d'un mélange caoutchouteux avant d'être mis en place. Ce mélange caoutchouteux vient ensuite pénétrer le câble sous l'effet de la pression et de la température lors de la cuisson du pneumatique. L'enrobage des câbles par le mélange caoutchouteux peut être réalisé dans une phase intermédiaire entre la fabrication du câble et sa mise en place pour être stocké sous forme de bobine. Une variante de fabrication consiste à réaliser l'enrobage des câbles par le mélange caoutchouteux simultanément ou plus exactement juste avant la mise en place desdits câbles.

Les résultats obtenus en termes d'endurance et d'usure lors de roulages prolongés sur routes à grande vitesse sont le plus souvent satisfaisants. Toutefois, il apparaît que dans certaines conditions de roulage, certains pneumatiques présentent une usure plus prononcée sur une partie de leur bande de roulement et notamment au centre. Ce phénomène s'accentue lorsque la largeur de la bande de roulement augmente.

Un but de l'invention est de fournir des pneumatiques pour véhicules "Poids-Lourds", dont les performances d'endurance et d'usure sont conservées pour des usages routiers quelles que soient les conditions d'usage.

Ce but est atteint selon l'invention par un pneumatique à armature de carcasse radiale comprenant une armature de sommet formée d'au moins deux couches de sommet de travail d'éléments de renforcement inextensibles, croisés d'une couche à l'autre en faisant avec la direction circonférentielle des angles compris entre 10° et 45°, elle-même coiffée radialement d'une bande de roulement, ladite bande de roulement étant réunie à deux bourrelets par l'intermédiaire de deux flancs, l'armature de sommet comportant au moins une couche d'éléments de renforcement circonférentiels répartis axialement selon un pas variable, la couche d'éléments de renforcement circonférentiels étant constituée d'au moins cinq parties dont une partie centrale, deux parties intermédiaires et deux parties axialement extérieures, la valeur du pas dans la partie centrale étant comprise entre 1.1 et 1.5 fois la valeur du pas des parties axialement extérieures et la valeur du pas dans une partie intermédiaire étant comprise entre 1.6 et 2 fois la valeur du pas des parties axialement extérieures.

Au sens de l'invention, le pas dans une partie de la couche d'éléments de renforcement circonférentiels est la distance entre deux éléments de renforcement consécutifs. Elle est mesurée entre les axes longitudinaux desdits éléments de renforcement selon une direction perpendiculaire à au moins l'un desdits axes longitudinaux. Elle est donc mesurée selon une direction sensiblement axiale.

Le pneumatique ainsi défini selon l'invention présente une couche d'éléments de renforcement circonférentiels répartis avec un pas variable conduisant à une couche présentant une rigidité selon la direction circonférentielle, ou rigidité circonférentielle, qui varie selon la direction axiale. Selon l'invention, la couche d'éléments de renforcement circonférentiels présente une rigidité selon la direction circonférentielle plus importante au niveau des extrémités axiales de ladite couche qu'au centre. En outre, la rigidité circonférentielle de ladite couche d'éléments de renforcement circonférentiels diminue depuis une extrémité axiale jusqu'à une zone intermédiaire pour augmenter à nouveau depuis cette zone intermédiaire jusqu'à la partie centrale de ladite couche.

Le pneumatique selon l'invention comporte ainsi avantageusement une couche d'éléments de renforcement circonférentiels qui présente une rigidité circonférentielle inférieure au sommet du pneumatique par rapport à la rigidité circonférentielle aux extrémités de ladite couche d'éléments de renforcement circonférentiels.

La rigidité de la partie centrale de la couche d'éléments de renforcement circonférentielle reste suffisante afin d'assurer un frettage satisfaisant du pneumatique au niveau de cette partie centrale pour supporter les contraintes imposées notamment lors du gonflage ou des roulages à grandes vitesses et limiter l'expansion circonférentielle de l'armature de sommet.

Selon l'invention, la valeur du pas dans la partie centrale est supérieure à 1.1 fois la valeur du pas des parties axialement extérieures.

Les essais ont mis en évidence qu'un tel pneumatique ainsi défini selon l'invention conserve des propriétés d'endurance satisfaisantes et présente en outre des performances en termes de résistance à l'usure homogène sur la largeur de la bande de roulement quelles que soient les conditions d'usage.

En outre, il est apparu que le pneumatique ainsi défini selon l'invention présente des propriétés en termes de résistances aux agressions améliorés par rapport à des pneumatiques connus lorsque lesdits pneumatiques sont par exemple amenés à circuler sur des terrains non bitumés.

Les inventeurs ont en effet su mettre en évidence que les agressions qui interviennent sur des terrains non bituminés concernent essentiellement la partie centrale de la bande de roulement du pneumatique, celle-ci étant semble-t-il toujours la plus exposée.

Le pneumatique tel que défini selon l'invention conduit à un assouplissement selon la direction radiale de la partie axialement centrale du pneumatique du fait notamment de la moindre rigidité de la couche d'éléments de renforcements circonférentiels dans la zone centrale de la bande de roulement du pneumatique. Cet assouplissement conduit, au vu des résultats obtenus, à une absorption des agressions de la bande de roulement de la part des obstacles tels que des cailloux présent sur les sols sur lesquels circulent le véhicule.

D'autres avantages d'un pneumatique selon l'invention comparé à un pneumatique comportant une couche d'éléments de renforcement circonférentiels répartis avec un pas constant sur toute la largeur axiale de ladite couche sont d'une part son poids et d'autre part, son coût de fabrication. La structure du pneumatique selon l'invention étant allégée comparée à celle d'un pneumatique usuel comportant une couche d'éléments de renforcement circonférentiels répartis avec un pas constant, le poids du pneumatique selon l'invention est inférieur à celui du pneumatique usuel. En effet, le pas entre les éléments de renforcement d'un pneumatique usuel comportant une couche d'éléments de renforcement circonférentiels répartis avec un pas constant est défini à partir du pas minimum nécessaire pour satisfaire aux différentes normes d'acceptations pour la commercialisation des pneumatiques. Le pneumatique selon l'invention voit donc une diminution de la quantité de matière nécessaire pour réaliser la couche d'éléments de renforcement circonférentiels.

De la même façon, le coût des matériaux pour la fabrication d'un pneumatique selon l'invention est inférieur à celui d'un pneumatique comportant une couche d'éléments de renforcement circonférentiels répartis avec un pas constant puisque la quantité de matière nécessaire pour réaliser la couche d'éléments de renforcement circonférentiels est inférieure. En outre, pour les mêmes raisons, le temps de fabrication de la couche d'éléments de renforcement circonférentiels du pneumatique selon l'invention est diminué par rapport au temps de fabrication d'une couche d'éléments de renforcement circonférentiels répartis avec un pas constant.

Selon une variante avantageuse de réalisation de l'invention, la couche d'éléments de renforcement circonférentiels présente une largeur axiale supérieure à 0.5xS.

S est la largeur maximale axiale du pneumatique, lorsque ce dernier est monté sur sa jante de service et gonflé à sa pression recommandée.

Les largeurs axiales des couches d'éléments de renforcement sont mesurées sur une coupe transversale d'un pneumatique, le pneumatique étant donc dans un état non gonflé.

Selon un mode de réalisation préféré de l'invention, la largeur axiale de la partie centrale de la couche d'éléments de renforcement circonférentiels est comprise entre 30 et 40 % de la largeur axiale de la couche d'éléments de renforcement circonférentiels. Les inventeurs considèrent que sur une telle zone, la densité d'éléments de renforcements circonférentielles est telle que définie selon l'invention et notamment pas plus faible pour assurer un frettage satisfaisant du pneumatique au niveau de cette partie centrale pour supporter les contraintes imposées notamment lors du gonflage ou des roulages à grandes vitesses.

De préférence également selon l'invention, la largeur axiale de chacune des parties axialement extérieures de la couche d'éléments de renforcement circonférentiels est comprise entre 7 et 15 % de la largeur axiale de la couche d'éléments de renforcement circonférentiels. Les inventeurs ont su mettre en évidence que sur les zones intermédiaires ainsi défini la densité d'éléments de renforcement circonférentiels pouvait être diminuée telle que définie selon l'invention sans nuire aux performances du pneumatiques.

De préférence encore, la largeur axiale de chacune des parties intermédiaires de la couche d'éléments de renforcement circonférentiels est comprise entre 15 et 30 % de la largeur axiale de la couche d'éléments de renforcement circonférentiels.

L'invention prévoit avantageusement que la répartition des valeurs du pas de la couche d'éléments de renforcement circonférentiels est symétrique par rapport au plan équatorial du pneumatique.

Avantageusement encore, la couche d'éléments de renforcement circonférentiels est centrée sur le sommet du pneumatique. La répartition des zones est ainsi symétrique par rapport au plan équatorial du pneumatique. La répartition des éléments de renforcement circonférentiels est alors également symétrique selon la direction axiale par rapport au plan équatorial du pneumatique.

L'invention prévoit encore avantageusement qu'au moins une couche constituant l'architecture sommet est présente radialement sous le « rib », ou sculpture d'orientation principale longitudinale, axialement le plus à l'extérieur. Cette réalisation permet comme énoncé précédemment de renforcer la rigidité de ladite sculpture. Avantageusement encore, la couche d'éléments de renforcement circonférentiels est présente radialement sous le « rib », ou sculpture d'orientation principale longitudinale, axialement le plus à l'extérieur.

Selon une réalisation préférée de l'invention, au moins deux couches de sommet de travail présentent des largeurs axiales différentes, la différence entre la largeur axiale de la couche de sommet de travail axialement la plus large et la largeur axiale de la couche de sommet de travail axialement la moins large étant comprise entre 10 et 30 mm.

De préférence encore, la couche de sommet de travail axialement la plus large -est radialement à l'intérieur des autres couches de sommet de travail.

Selon un mode de réalisation préférée de l'invention, la couche d'éléments de renforcement circonférentiels est radialement disposée entre deux couches de sommet de travail.

Avantageusement encore selon l'invention, les largeurs axiales des couches de sommet de travail radialement adjacentes à la couche d'éléments de renforcement circonférentiels sont supérieures à la largeur axiale de ladite couche d'éléments de renforcement circonférentiels et de préférence, lesdites couches de sommet de travail adjacentes à la couche d'éléments de renforcement circonférentiels sont de part et d'autre du plan équatorial et dans le prolongement axial immédiat de la couche d'éléments de renforcement circonférentiels couplées sur une largeur axiale, pour être ensuite découplées par des profilés de mélange de caoutchouc au moins sur le restant de la largeur commune aux dites deux couches de travail.

Au sens de l'invention des couches couplées sont des couches dont les éléments de renforcement respectifs sont séparés radialement d'au plus 1,5 mm, ladite épaisseur de caoutchouc étant mesurée radialement entre les génératrices respectivement supérieure et inférieure desdits éléments de renforcement.

La présence de tels couplages entre les couches de sommet de travail adjacentes à la couche d'éléments de renforcement circonférentiels permettent la diminution des contraintes de tension agissant sur les éléments circonférentiels axialement le plus à l'extérieur et situé le plus près du couplage.

L'épaisseur des profilés de découplage entre nappes de travail, mesurée au droit des extrémités de la nappe de travail la moins large, sera au moins égale à deux millimètres, et préférentiellement supérieure à 2,5 mm.

Selon un mode de réalisation avantageux de l'invention, les éléments de renforcement d'au moins une couche d'éléments de renforcement circonférentiels sont des éléments de renforcement métalliques présentant un module sécant à 0,7 % d'allongement compris entre 10 et 120 GPa et un module tangent maximum inférieur à 150 GPa.

Selon une réalisation préférée, le module sécant des éléments de renforcement à 0,7 % d'allongement est inférieur à 100 GPa et supérieur à 20 GPa, de préférence compris entre 30 et 90 GPa et de préférence encore inférieur à 80 GPa.

De préférence également, le module tangent maximum des éléments de renforcement est inférieur à 130 GPa et de préférence encore inférieur à 120 GPa.

Les modules exprimés ci-dessus sont mesurés sur une courbe contrainte de traction en fonction de l'allongement déterminée avec une précontrainte de 20 MPa ramenée à la section de métal de l'élément de renforcement, la contrainte de traction correspondant à une tension mesurée ramenée à la section de métal de l'élément de renforcement.

Les modules des mêmes éléments de renforcement peuvent être mesurés sur une courbe contrainte de traction en fonction de l'allongement déterminée avec une précontrainte de 10 MPa ramenée à la section globale de l'élément de renforcement, la contrainte de traction correspondant à une tension mesurée ramenée à la section globale de l'élément de renforcement. La section globale de l'élément de renforcement est la section d'un élément composite constitué de métal et de caoutchouc, ce dernier ayant notamment pénétré l'élément de renforcement pendant la phase de cuisson du pneumatique.

Selon cette formulation relative à la section globale de l'élément de renforcement, les éléments de renforcement des parties axialement extérieures et de la partie centrale d'au moins une couche d'éléments de renforcement circonférentiels sont des éléments de renforcement métalliques présentant un module sécant à 0,7 % d'allongement compris entre 5 et 60 GPa et un module tangent maximum inférieur à 75 GPa.

Selon une réalisation préférée, le module sécant des éléments de renforcement à 0,7 % d'allongement est inférieur à 50 Gpa et supérieur à 10 GPa, de préférence compris entre 15 et 45 GPa et de préférence encore inférieure à 40 GPa.

De préférence également, le module tangent maximum des éléments de renforcement est inférieur à 65 GPa et de préférence encore inférieur à 60 GPa.

Selon un mode de réalisation préféré, les éléments de renforcements d'au moins une couche d'éléments de renforcement circonférentiels sont des éléments de renforcement métalliques présentant une courbe contrainte de traction en fonction de l'allongement relatif ayant des faibles pentes pour les faibles allongements et une pente sensiblement constante et forte pour les allongements supérieurs. De tels éléments de renforcement de la nappe additionnelle sont habituellement dénommés éléments "bi-module".

Selon une réalisation préférée de l'invention, la pente sensiblement constante et forte apparaît à partir d'un allongement relatif compris entre 0,1% et 0,5%.

Les différentes caractéristiques des éléments de renforcement énoncées ci-dessus sont mesurées sur des éléments de renforcement prélevés sur des pneumatiques.

Des éléments de renforcement plus particulièrement adaptés à la réalisation d'au moins une couche d'éléments de renforcement circonférentiels selon l'invention sont par exemple des assemblages de formule 21.23, dont la construction est 3x(0.26+6x0.23) 4.4/6.6 SS ; ce câble à torons est constitué de 21 fils élémentaires de formule 3 x (1+6), avec 3 torons tordus ensembles chacun constitué de 7 fils, un fil formant une âme centrale de diamètre égal à 26/100 mm et 6 fils enroulés de diamètre égal à 23/100 mm. Un tel câble présente un module sécant à 0,7% égal à 45 GPa et un module tangent maximum égal à 98 GPa, mesurés sur une courbe contrainte de traction en fonction de l'allongement déterminée avec une précontrainte de 20 MPa ramenée à la section de métal de l'élément de renforcement, la contrainte de traction correspondant à une tension mesurée ramenée à la section de métal de l'élément de renforcement. Sur une courbe contrainte de traction en fonction de l'allongement déterminée avec une précontrainte de 10 MPa ramenée à la section globale de l'élément de renforcement, la contrainte de traction correspondant à une tension mesurée ramenée à la section globale de l'élément de renforcement, ce câble de formule 21.23 présente un module sécant à 0,7% égal à 23 GPa et un module tangent maximum égal à 49 GPa.

De la même façon, un autre exemple d'éléments de renforcement est un assemblage de formule 21.28, dont la construction est 3x(0.32+6x0.28) 6.2/9.3 SS. Ce câble présente un module sécant à 0,7% égal à 56 GPa et un module tangent maximum égal à 102 GPa, mesurés sur une courbe contrainte de traction en fonction de l'allongement déterminée avec une précontrainte de 20 MPa ramenée à la section de métal de l'élément de renforcement, la contrainte de traction correspondant à une tension mesurée ramenée à la section de métal de l'élément de renforcement. Sur une courbe contrainte de traction en fonction de l'allongement déterminée avec une précontrainte de 10 MPa ramenée à la section globale de l'élément de renforcement, la contrainte de traction correspondant à une tension mesurée ramenée à la section globale de l'élément de renforcement, ce câble de formule 21.28 présente un module sécant à 0,7% égal à 27 GPa et un module tangent maximum égal à 49 GPa.

L'utilisation de tels éléments de renforcement dans au moins une couche d'éléments de renforcement circonférentiels permet notamment de conserver des rigidités de la couche satisfaisante y compris après les étapes de conformation et de cuisson dans des procédés de fabrication usuels.

Selon un deuxième mode de réalisation de l'invention, les éléments de renforcement circonférentiels peuvent être formées d'éléments métalliques inextensibles et coupés de manière à former des tronçons de longueur très inférieure à la circonférence de la couche la moins longue, mais préférentiellement supérieure à 0,1 fois ladite circonférence, les coupures entre tronçons étant axialement décalées les unes par rapport aux autres. De préférence encore, le module d'élasticité à la traction par unité de largeur de la couche additionnelle est inférieur au module d'élasticité à la traction, mesuré dans les mêmes conditions, de la couche de sommet de travail la plus extensible. Un tel mode de réalisation permet de conférer, de manière simple, à la couche d'éléments de renforcement circonférentiels un module pouvant facilement être ajusté (par le choix des intervalles entre tronçons d'une même rangée), mais dans tous les cas plus faible que le module de la couche constituée des mêmes éléments métalliques mais continus, le module de la couche additionnelle étant mesuré sur une couche vulcanisée d'éléments coupés, prélevée sur le pneumatique.

Selon un troisième mode de réalisation de l'invention, les éléments de renforcement circonférentiels sont des éléments métalliques ondulés, le rapport a/λ, de l'amplitude d'ondulation sur la longueur d'onde étant au plus égale à 0,09. De préférence, le module d'élasticité à la traction par unité de largeur de la couche additionnelle est inférieur au module d'élasticité à la traction, mesuré dans les mêmes conditions, de la couche de sommet de travail la plus extensible.

Les éléments métalliques sont préférentiellement des câbles d'acier.

L'invention prévoit encore avantageusement pour diminuer les contraintes de tension agissant sur les éléments circonférentiels axialement le plus à l'extérieur que l'angle formé avec la direction circonférentielle par les éléments de renforcement des couches de sommet de travail est inférieur à 30° et de préférence inférieur à 25°.

Selon une autre variante avantageuse de l'invention, les couches de sommet de travail comportent des éléments de renforcement, croisés d'une nappe à l'autre, faisant avec la direction circonférentielle des angles variables selon la direction axiale, lesdits angles étant supérieurs sur les bords axialement extérieurs des couches d'éléments de renforcement par rapport aux angles desdits éléments mesurés au niveau du plan médian circonférentiel. Une telle réalisation de l'invention permet d'augmenter la rigidité circonférentielle dans certaines zones et au contraire de la diminuer dans d'autres, notamment pour diminuer les mises en compression de l'armature de carcasse.

Une réalisation préférée de l'invention prévoit encore que l'armature de sommet est complétée radialement à l'extérieur par au moins une couche supplémentaire, dite de protection, d'éléments de renforcement dits élastiques, orientés par rapport à la direction circonférentielle avec un angle compris entre 10° et 45° et de même sens que l'angle formé par les éléments inextensibles de la couche de travail qui lui est radialement adjacente.

La couche de protection peut avoir une largeur axiale inférieure à la largeur axiale de la couche de travail la moins large. Ladite couche de protection peut aussi avoir une largeur axiale supérieure à la largeur axiale de la couche de travail la moins large, telle qu'elle recouvre les bords de la couche de travail la moins large et, dans le cas de la couche radialement supérieure comme étant le moins large, telle qu'elle soit couplée, dans le prolongement axial de l'armature additionnelle, avec la couche de sommet de travail la plus large sur une largeur axiale, pour être ensuite, axialement à l'extérieur, découplée de ladite couche de travail la plus large par des profilés d'épaisseur au moins égale à 2 mm. La couche de protection formée d'éléments de renforcement élastiques peut, dans le cas cité ci-dessus, être d'une part éventuellement découplée des bords de ladite couche de travail la moins large par des profilés d'épaisseur sensiblement moindre que l'épaisseur des profilés séparant les bords des deux couches de travail, et avoir d'autre part une largeur axiale inférieure ou supérieure à la largeur axiale de la couche de sommet la plus large.

Selon l'un quelconque des modes de réalisation de l'invention évoqué précédemment, l'armature de sommet peut encore être complétée, radialement à l'intérieur entre l'armature de carcasse et la couche de travail radialement intérieure la plus proche de ladite armature de carcasse, par une couche de triangulation d'éléments de renforcement inextensibles métalliques en acier faisant, avec la direction circonférentielle, un angle supérieur à 60° et de même sens que celui de l'angle formé par les éléments de renforcement de la couche radialement la plus proche de l'armature de carcasse.

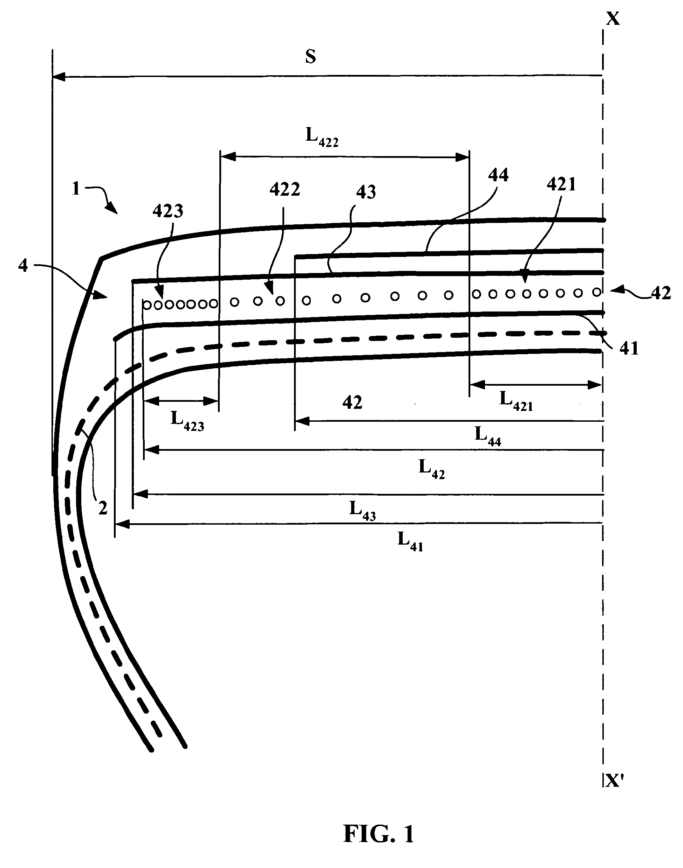

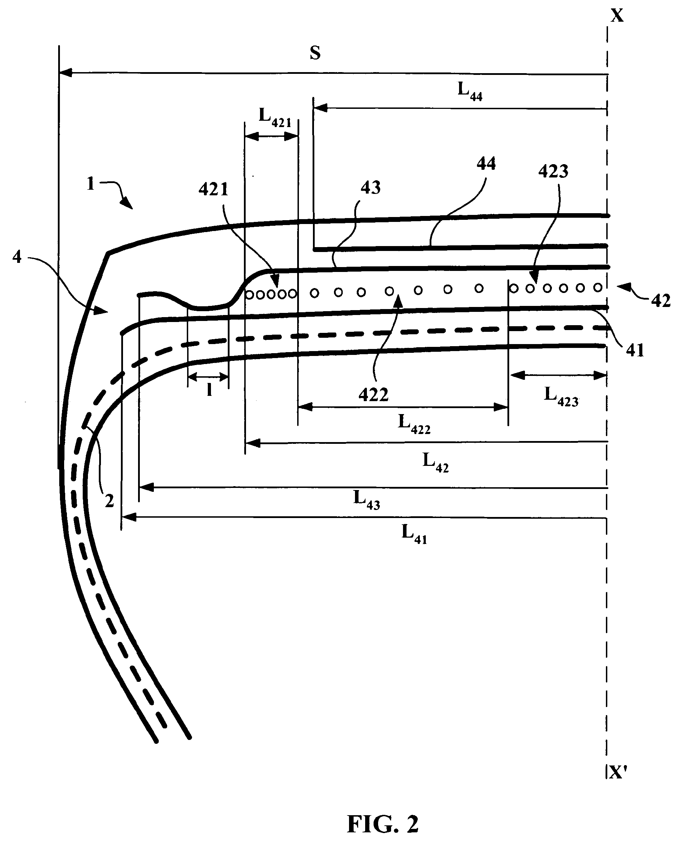

D'autres détails et caractéristiques avantageux de l'invention ressortiront ci-après de la description des exemples de réalisation de l'invention en référence aux figures 1 et 2 qui représentent :
- figure1, une vue méridienne d'un schéma d'un pneumatique selon un mode de réalisation de l'invention,
- figure 2, une vue méridienne d'un schéma d'un pneumatique selon un deuxième mode de réalisation de l'invention.

Les figures ne sont pas représentées à l'échelle pour en simplifier la compréhension. Les figures ne représentent qu'une demi-vue d'un pneumatique qui se prolonge de manière symétrique par rapport à l'axe XX' qui représente le plan médian circonférentiel, ou plan équatorial, d'un pneumatique.

Sur la figure 1, le pneumatique 1, de dimension 315/70 R 22.5, a un rapport de forme H/S égal à 0,70, H étant la hauteur du pneumatique 1 sur sa jante de montage et S sa largeur axiale maximale. Ledit pneumatique 1 comprend une armature de carcasse radiale 2 ancrée dans deux bourrelets, non représentés sur la figure. L'armature de carcasse est formée d'une seule couche de câbles métalliques. Cette armature de carcasse 2 est frettée par une armature de sommet 4, formée radialement de l'intérieur à l'extérieur :
- d'une première couche de travail 41 formée de câbles métalliques inextensibles 11.35 non frettés, continus sur toute la largeur de la nappe, orientés d'un angle égal à 18°,
- d'une couche d'éléments de renforcement circonférentiels 42 formée de câbles métalliques en acier 21x28, de type "bi-module", constituée de cinq parties dont une partie centrale 421, deux parties axialement extérieures 423 et deux parties intermédiaires 422,
- d'une seconde couche de travail 43 formée de câbles métalliques inextensibles 11.35 non frettés, continus sur toute la largeur de la nappe, orientés d'un angle égal à 18° et croisés aux câbles métalliques de la couche 41,
- d'une couche de protection 44 formées de câbles métalliques élastiques 6x35.

L'armature de sommet est elle-même coiffée d'une bande de roulement 6.

La largeur axiale maximale S du pneumatique est égale à 319 mm.

La largeur axiale L₄₁ de la première couche de travail 41 est égale à 260 mm.

La largeur axiale L₄₃ de la deuxième couche de travail 43 est égale à 245 mm.

La largeur axiale L₄₂ de la couche d'éléments de renforcement circonférentiels 42, elle est égale à 198 mm.

La largeur axiale L₄₂₁ de la partie centrale 421 est égale à 33 mm. Sur cette partie centrale 421, le pas entre les éléments de renforcements circonférentiels est égal 2.8 mm. Le rapport de deux fois la largeur axiale L₄₂₁ sur la largeur axiale L₄₂ est proche de 33 % et donc compris entre 30 et 40 %.

La largeur axiale L₄₂₃ de chacune des parties axialement extérieures 423 est égale à 24 mm. Sur ces parties axialement extérieures 423, le pas entre les éléments de renforcements circonférentiels est égal 1.9 mm. Le rapport de la largeur axiale L₄₂₃ sur la largeur axiale L₄₂ est proche de à 12 % et donc compris entre 7 et 15 %.

La largeur axiale L₄₂₂ de chacune des parties intermédiaires 422 est égale à 42 mm. Sur ces parties intermédiaires 422, le pas entre les éléments de renforcements circonférentiels est égal 3.3 mm. Le rapport de la largeur axiale L₄₂₂ sur la largeur axiale L₄₂ est proche de 21 % et donc compris entre 15 et 30 %.

Le rapport de la valeur du pas dans la partie centrale sur la valeur du pas des parties axialement extérieures est égal à 1.47 et donc compris entre 1 et 1.5.

Le rapport de la valeur du pas dans les parties intermédiaires sur la valeur du pas des parties axialement extérieures est égal à 1.74 et donc compris entre 1.6 et 2.

La dernière nappe de sommet 44, dite de protection, a une largeur L₄₄ égale à 180 mm.

Sur la figure 2, le pneumatique 1 diffère de celui représenté sur la figure 1 en ce que les deux couches de travail 41 et 43 sont, de chaque côté du plan équatorial et axialement dans le prolongement de la couche d'éléments de renforcement circonférentiels 42, couplées sur une largeur axiale 1. Sur la largeur restante commune aux deux couches de travail, les deux couches de travail 41, 43 sont séparés par un profilé de caoutchouc, non représenté sur la figure, l'épaisseur dudit profilé étant croissante en allant de l'extrémité axiale de la zone de couplage à l'extrémité de la couche de travail la moins large. Ledit profilé a avantageusement une largeur suffisante pour recouvrir radialement l'extrémité de la couche de travail 41 la plus large, qui est, dans ce cas la couche de travail radialement la plus proche de l'armature de carcasse.

Des essais ont été réalisés avec le pneumatique réalisé selon l'invention conformément à la représentation de la figure 1 et comparés avec un pneumatique de référence identique mais réalisé selon une configuration usuelle.

Ce pneumatique de référence comporte une couche d'éléments de renforcements circonférentiels de même largeur que celle du pneumatique réalisé selon l'invention mais dont le pas entre les éléments de renforcement circonférentiels est constant sur toute sa largeur.

Des premiers essais d'endurance ont été réalisés en équipant des véhicules identiques avec chacun des pneumatiques et en faisant suivre des parcours en ligne droite à chacun des véhicules, les pneumatiques étant soumis à des charges supérieures à la charge nominale pour accélérer ce type de test.

Les véhicules sont associés à une charge par pneumatique de 4000 Kg.

D'autres essais d'endurance ont été réalisés sur une machine de tests imposant une charge aux pneumatiques et un angle de dérive. Les essais ont été réalisés pour les pneumatiques selon l'invention avec une charge et un angle de dérive identiques à ceux appliqués aux pneumatiques de référence.

Les essais ainsi réalisés ont montré que les distances parcourues lors de chacun de ces tests sont sensiblement identiques pour les pneumatiques selon l'invention et les pneumatiques de référence. Il apparaît donc que les pneumatiques selon l'invention présentent des performances sensiblement équivalentes en termes d'endurance que les pneumatiques de référence.

Enfin d'autres essais de roulage ont été effectués sur des sols non bitumés présentant des reliefs simulant la présence de cailloux particulièrement agressifs pour les bandes de roulement des pneumatiques.

Ces derniers essais ont montré qu'après des distances parcourues identiques les pneumatiques selon l'invention présentent des altérations moins sévères que celles des pneumatiques de référence qui sont jugées rédhibitoires quant à l'utilisation ultérieure des pneumatiques de référence.

En outre, la fabrication du pneumatique réalisé selon l'invention comparé à celle du pneumatique de référence montre un gain en poids et en coûts par rapport au pneumatique de référence en tenant compte d'une part du coût des matières et plus spécifiquement du coût concernant le câble formant la couche d'éléments de renforcement circonférentiels et d'autre part du coût de fabrication lié au procédé et plus spécifiquement à la pose des éléments de renforcement circonférentiels.

## Revendications

1. Pneumatique à armature de carcasse radiale comprenant une armature de sommet (4) formée d'au moins deux couches de sommet de travail d'éléments de renforcement inextensibles, croisés d'une couche à l'autre en faisant avec la direction circonférentielle des angles compris entre 10° et 45°, elle-même coiffée radialement d'une bande de roulement, ladite bande de roulement étant réunie à deux bourrelets par l'intermédiaire de deux flancs, l'armature de sommet comportant au moins une couche d'éléments de renforcement circonférentiels (42) repartis axialement selon un pas variable, la couche d'éléments de renforcement circonférentiels étant constituée d'au moins cinq parties dont une partie centrale (421), deux parties intermédiaires (422) et deux parties axialement extérieures, (423) **caractérisé en ce que** la valeur du pas dans la partie centrale est comprise entre 1.1 et 1.5 fois la valeur du pas des parties axialement extérieures et **en ce que** la valeur du pas dans une partie intermédiaire est comprise entre 1.6 et 2 fois la valeur du pas des parties axialement extérieures.

2. Pneumatique selon la revendication 1, **caractérisé en ce que** la largeur axiale de la partie centrale de la couche d'éléments de renforcement circonférentiels est comprise entre 30 et 40 % de la largeur axiale de la couche d'éléments de renforcement circonférentiels.

3. Pneumatique selon la revendication 1 ou 2, **caractérisé en ce que** la largeur axiale de chacune des parties axialement extérieures de la couche d'éléments de renforcement circonférentiels est comprise entre 7 et 15 % de la largeur axiale de la couche d'éléments de renforcement circonférentiels.

4. Pneumatique selon l'une des revendications 1 à 3, **caractérisé en ce que** la largeur axiale de chacune des parties intermédiaires de la couche d'éléments de renforcement circonférentiels est comprise entre 15 et 30 % de la largeur axiale de la couche d'éléments de renforcement circonférentiels.

5. Pneumatique selon l'une des revendications 1 à 4, **caractérisé en ce que** la répartition des valeurs du pas de la couche d'éléments de renforcement circonférentiels est symétrique par rapport au plan équatorial du pneumatique.

6. Pneumatique selon l'une des revendications précédentes, **caractérisé en ce que** la couche d'éléments de renforcement circonférentiels est radialement disposée entre deux couches de sommet de travail.

7. Pneumatique selon l'une des revendications précédentes, au moins deux couches de sommet de travail présentant des largeurs axiales différentes, **caractérisé en ce que** la différence entre la largeur axiale de la couche de sommet de travail axialement la plus large et la largeur axiale de la couche de sommet de travail axialement la moins large est comprise entre 10 et 30 mm.

8. Pneumatique selon la revendication 7, **caractérisé en ce que** la couche de sommet de travail axialement la plus large est radialement à l'intérieur des autres couches de sommet de travail.

9. Pneumatique selon l'une des revendications précédentes, **caractérisé en ce que** les largeurs axiales des couches de sommet de travail radialement adjacentes à la couche d'éléments de renforcement circonférentiels sont supérieures à la largeur axiale de ladite couche d'éléments de renforcement circonférentiels.

10. Pneumatique selon la revendication 9, **caractérisé en ce que** les couches de sommet de travail adjacentes à la couche d'éléments de renforcement circonférentiels sont de part et d'autre du plan équatorial et dans le prolongement axial immédiat de la couche d'éléments de renforcement circonférentiels couplées sur une largeur axiale, pour être ensuite découplées par des profilés de mélange de caoutchouc au moins sur le restant de la largeur commune aux dites deux couches de travail.

11. Pneumatique selon l'une des revendications précédentes, **caractérisé en ce que** les éléments de renforcement d'au moins une couche d'éléments de renforcement circonférentiels sont des éléments de renforcement métalliques présentant un module sécant à 0,7 % d'allongement compris entre 10 et 120 GPa et un module tangent maximum inférieur à 150 GPa.

12. Pneumatique selon l'une des revendications précédentes, **caractérisé en ce que** les éléments de renforcement d'au moins une couche d'éléments de renforcement circonférentiels sont des éléments de renforcement métalliques présentant une courbe contrainte de traction en fonction de l'allongement relatif ayant des faibles pentes pour les faibles allongements et une pente sensiblement constante et forte pour les allongements supérieurs.

13. Pneumatique selon l'une des revendications 1 à 10, **caractérisé en ce que** les éléments de renforcement d'au moins une couche d'éléments de renforcement circonférentiels sont des éléments de renforcement métalliques coupés de manière à former des tronçons de longueur inférieure à la circonférence de la nappe la moins longue, mais supérieure à 0,1 fois ladite circonférence, les coupures entre tronçons étant axialement décalées les unes par rapport aux autres, le module d'élasticité à la traction par unité de largeur de la couche additionnelle étant de préférence inférieur au module d'élasticité à la traction, mesuré dans les mêmes conditions, de la couche de sommet de travail la plus extensible.

14. Pneumatique selon l'une des revendications 1 à 10, **caractérisé en ce que** les éléments de renforcement d'au moins une couche d'éléments de renforcement circonférentiels sont des éléments de renforcement métalliques ondulés, le rapport a/λ, de l'amplitude d'ondulation a sur la longueur d'onde λ étant au plus égale à 0,09, le module d'élasticité à la traction par unité de largeur de la couche additionnelle étant de préférence inférieur au module d'élasticité à la traction, mesuré dans les mêmes conditions, de la couche de sommet de travail la plus extensible.

## Claims

1. Tyre with a radial carcass reinforcement comprising a crown reinforcement (4) formed of at least two working crown layers of inextensible reinforcing elements, crossed from one layer to the other making angles of between 10° and 45° with the circumferential direction, itself radially capped by a tread, the said tread being connected to two beads via two sidewalls, the crown reinforcement comprising at least one layer of circumferential reinforcing elements distributed axially at a variable pitch, the layer (42) of circumferential reinforcing elements consisting of at least five parts, these being a central part (421), two intermediate parts (422) and two axially exterior parts (423), **characterized in that** the pitch in the central part is in the range between 1.1 and 1.5 times the pitch of the axially exterior parts and **in that** the pitch in an intermediate part is in the range between 1.6 and 2 times the pitch of the axially exterior parts.

2. Tyre according to Claim 1, **characterized in that** the axial width of the central part of the layer of circumferential reinforcing elements is in the range between 30 and 40% of the axial width of the layer of circumferential reinforcing elements.

3. Tyre according to Claim 1 or 2, **characterized in that** the axial width of each of the axially exterior parts of the layer of circumferential reinforcing elements is in the range between 7 and 15 % of the axial width of the layer of circumferential reinforcing elements.

4. Tyre according to one of Claims 1 to 3, **characterized in that** the axial width of each of the intermediate parts of the layer of circumferential reinforcing elements is in the range between 15 and 30% of the axial width of the layer of circumferential reinforcing elements.

5. Tyre according to one of Claims 1 to 4, **characterized in that** the distribution of pitch lengths in the layer of circumferential reinforcing elements is symmetric about the equatorial plane of the tyre.

6. Tyre according to one of the preceding claims, **characterized in that** the layer of circumferential reinforcing elements is positioned radially between two working crown layers.

7. Tyre according to one of the preceding claims, at least two working crown layers having different axial widths, **characterized in that** the difference between the axial width of the axially widest working crown layer and the axial width of the axially least wide working crown layer is comprised between 10 and 30 mm.

8. Tyre according to Claim 7, **characterized in that** the axially widest working crown layer is radially on the interior of the other working crown layers.

9. Tyre according to one of the preceding claims, **characterized in that** the axial widths of the working crown layers radially adjacent to the layer of circumferential reinforcing elements are greater than the axial width of the said layer of circumferential reinforcing elements.

10. Tyre according to Claim 9, **characterized in that** the working crown layers adjacent to the layer of circumferential reinforcing elements are on each side of the equatorial plane and in the immediate axial continuation of the layer of circumferential reinforcing elements coupled over an axial width in order thereafter to be decoupled by profiles of rubber compound at least over the remainder of the width common to the said two working layers.

11. Tyre according to one of the preceding claims, **characterized in that** the reinforcing elements of at least one layer of circumferential reinforcing elements are metal reinforcing elements with a secant modulus at 0.7% elongation comprised between 10 and 120 GPa and a maximum tangent modulus of less than 150 GPa.

12. Tyre according to one of the preceding claims, **characterized in that** the reinforcing elements of at least one layer of circumferential reinforcing elements are metal reinforcing elements having a curve of tensile stress as a function of relative elongation with shallow gradients for short elongations and a substantially constant and steep gradient for higher elongations.

13. Tyre according to one of Claims 1 to 10, **characterized in that** the reinforcing elements of at least one layer of circumferential reinforcing elements are metal reinforcing elements that are cut in such a way as to form portions of a length shorter than the circumference of the least long ply, but greater than 0.1 times the said circumference, the cuts between portions being axially offset from one another, the elastic modulus in tension per unit width of the additional layer preferably being less than the elastic modulus in tension, measured under the same conditions, of the most extensible working crown layer.

14. Tyre according to one of Claims 1 to 10, **characterized in that** the reinforcing elements of at least one layer of circumferential reinforcing elements are wavy metal reinforcing elements, the ratio a/λ of the amplitude of the wave a to the wavelength λ being at most equal to 0.09, the elastic modulus in tension per unit width of the additional layer preferably being less than the elastic modulus in tension, measured under the same conditions, of the most extensible working crown layer.

## Patentansprüche

1. Luftreifen mit radialer Karkassenbewehrung, der eine Scheitelbewehrung (4) enthält, die von mindestens zwei Arbeitsscheitelschichten aus nicht dehnbaren Verstärkungselementen geformt wird, die sich von einer Schicht zur anderen kreuzen, indem sie mit der Umfangsrichtung Winkel zwischen 10° und 45° bilden, die selbst radial von einem Laufstreifen überlagert wird, wobei der Laufstreifen mittels zweier Flanken mit zwei Wülsten vereinigt ist, wobei die Scheitelbewehrung mindestens eine Schicht von Umfangsverstärkungselementen (42) aufweist, die axial gemäß einem variablen Abstand verteilt sind, wobei die Schicht von Umfangsverstärkungselementen aus mindestens fünf Teilen besteht, darunter ein Mittelteil (421), zwei Zwischenteile (422) und zwei axial äußere Teile (423), **dadurch gekennzeichnet, dass** der Wert des Abstands im Mittelteil zwischen 1.1 und 1.5 Mal dem Wert des Abstands der axial äußeren Teile liegt, und dass der Wert des Abstands in einem Zwischenteil zwischen 1.6 und 2 Mal dem Wert des Abstands der axialen äußeren Teile liegt.

2. Luftreifen nach Anspruch 1, **dadurch gekennzeichnet, dass** die axiale Breite des Mittelbereichs der Schicht von Umfangsverstärkungselementen zwischen 30 und 40 % der axialen Breite der Schicht von Umfangsverstärkungselementen liegt.

3. Luftreifen nach Anspruch 1 oder 2, **dadurch gekennzeichnet, dass** die axiale Breite jedes der axial äußeren Teile der Schicht von Umfangsverstärkungselementen zwischen 7 und 15 % der axialen Breite der Schicht von Umfangsverstärkungselementen liegt.

4. Luftreifen nach einem der Ansprüche 1 bis 3, **dadurch gekennzeichnet, dass** die axiale Breite jedes der Zwischenteile der Schicht von Umfangsverstärkungselementen zwischen 15 und 30 % der axialen Breite der Schicht von Umfangsverstärkungselementen liegt.

5. Luftreifen nach einem der Ansprüche 1 bis 4, **dadurch gekennzeichnet, dass** die Verteilung der Werte des Abstands der Schicht von Umfangsverstärkungselementen bezüglich der Äquatorialebene des Luftreifens symmetrisch ist.

6. Luftreifen nach einem der vorhergehenden Ansprüche, **dadurch gekennzeichnet, dass** die Schicht von Umfangsverstärkungselementen radial zwischen zwei Arbeitsscheitelschichten angeordnet ist.

7. Luftreifen nach einem der vorhergehenden Ansprüche, wobei mindestens zwei Arbeitsscheitelschichten unterschiedliche axiale Breiten aufweisen, **dadurch gekennzeichnet, dass** die Differenz zwischen der axialen Breite der axial breitesten Arbeitsscheitelschicht und der axialen Breite der axial am wenigsten breiten Arbeitsscheitelschicht zwischen 10 und 30 mm liegt.

8. Luftreifen nach Anspruch 7, **dadurch gekennzeichnet, dass** die axial breiteste Arbeitsscheitelschicht sich radial innerhalb der anderen Arbeitsscheitelschichten befindet.

9. Luftreifen nach einem der vorhergehenden Ansprüche, **dadurch gekennzeichnet, dass** die axialen Breiten der radial der Schicht von Umfangsverstärkungselementen benachbarten Arbeitsscheitelschichten größer als die die axiale Breite der Schicht von Umfangsverstärkungselementen sind.

10. Luftreifen nach Anspruch 9, **dadurch gekennzeichnet, dass** die der Schicht von Umfangsverstärkungselementen benachbarten Arbeitsscheitelschichten zu beiden Seiten der Äquatorialebene und in der direkten axialen Verlängerung der Schicht von Umfangsverstärkungselementen über eine axiale Breite gekoppelt sind, um anschließend durch Profilteile aus einer Kautschukmischung über mindestens den Rest der den zwei Arbeitsschichten gemeinsamen Breite entkoppelt zu sein.

11. Luftreifen nach einem der vorhergehenden Ansprüche, **dadurch gekennzeichnet, dass** die Verstärkungselemente mindestens eine Schicht von Umfangsverstärkungselementen metallische Verstärkungselemente sind, die einen Sekantenmodul bei 0,7 % Längung zwischen 10 und 120 GPa und einen maximalen Tangentenmodul geringer als 150 GPa aufweisen.

12. Luftreifen nach einem der vorhergehenden Ansprüche, **dadurch gekennzeichnet, dass** die Verstärkungselemente mindestens einer Schicht von Umfangsverstärkungselementen metallische Verstärkungselemente sind, die eine Zugspannungskurve abhängig von der relativen Längung mit geringen Steigungen für die geringen Längungen und mit im Wesentlichen konstanter und starker Steigung für die größeren Längungen aufweisen.

13. Luftreifen nach einem der Ansprüche 1 bis 10, **dadurch gekennzeichnet, dass** die Verstärkungselemente mindestens einer Schicht von Umfangsverstärkungselementen metallische Verstärkungselemente sind, die so geschnitten sind, dass sie Abschnitte einer Länge geringer als der Umfang der am wenigsten langen Lage, aber größer als 0,1 Mal der Umfang formen, wobei die Schnitte zwischen Abschnitten axial zueinander versetzt sind, wobei der Zugelastizitätsmodul pro Breiteneinheit der zusätzlichen Schicht vorzugsweise geringer als der Zugelastizitätsmodul, gemessen unter den gleichen Bedingungen, der dehnbarsten Arbeitsscheitelschicht ist.

14. Luftreifen nach einem der Ansprüche 1 bis 10, **dadurch gekennzeichnet, dass** die Verstärkungselemente mindestens einer Schicht von Umfangsverstärkungselementen gewellte metallische Verstärkungselemente sind, wobei das Verhältnis a/λ der Wellenamplitude a zur Wellenlänge λ höchstens gleich 0,09 ist, wobei der Zugelastizitätsmodul pro Breiteneinheit der zusätzlichen Schicht vorzugsweise geringer als der Zugelastizitätsmodul, gemessen unter den gleichen Bedingungen, der dehnbarsten Arbeitsscheitelschicht ist.
